# EUROPÄISCHE PATENTSCHRIFT

(11) **EP 3 829 031 B1**
(45) Veröffentlichungstag und Bekanntmachung des Hinweises auf die Patenterteilung: **03.09.2025**
(21) Anmeldenummer: 20205976.2
(22) Anmeldetag: 05.11.2020
(51) Int. Cl.: H02K 1/276

(54) **ROTORBLECH, ROTORBLECHPAKET, ROTOR, ELEKTRISCHE MASCHINE UND FAHRZEUG**
ROTOR PLATE, SHEET METAL ROTOR PACKAGE, ROTOR, ELECTRIC MACHINE AND VEHICLE
TÔLE DE ROTOR, PAQUET DE TÔLES DE ROTOR, ROTOR, MOTEUR ÉLECTRIQUE ET VÉHICULE

(30) Priorität: 27.11.2019 DE 102019132188
(43) Veröffentlichungstag der Anmeldung: 02.06.2021
(73) Patentinhaber: Valeo eAutomotive Germany GmbH, 91056 Erlangen (DE)
(72) Erfinder: BECK, Christine, 97789 Unterleichtersbach (DE)

(56) Entgegenhaltungen:
- WO-A1-2018/189822
- DE-A1- 102013 219 260
- DE-A1- 102017 209 207
- US-A1- 2015 162 790

## Beschreibung

Die vorliegende Erfindung betrifft ein Rotorblech. Daneben betrifft die Erfindung ein Rotorblechpaket, einen Rotor, eine elektrische Maschine und ein Fahrzeug.

Die DE 10 2017 209207 A1 offenbart einen Rotor einer elektrischen Maschine, der ein bezüglich einer Symmetrieachse, die radial durch einen Mittelpunkt des Rotors verläuft, symmetrisches Paar von Magnettaschen zum Aufnehmen von Permanentmagneten aufweist. Eine jeweilige Magnettasche weist einen Randbereich auf, dessen Abstand zu einem Umfangsrand des Rotors gleichbreit ist. Eine Schenkelseite weist einen Vorsprung und einen Rücksprung auf.

Die WO 2018/189822 A1 offenbart einen IPM-Rotor mit einer Vielzahl von geschichteten Blechen, die Magnetaufnahmelöcher aufweisen. Ein Blech mit einem Magnetaufnahmeloch weist einen Vorsprung auf. Zur Außenkontur hin erstreckt sich ein Rand des Magnetaufnahmelochs wieder in eine dem Vorsprung entgegengesetzte Richtung.

Die US 2015/162790 A1 offenbart einen Rotorkern mit einer Vielzahl von in Umfangsrichtung angeordneten Magnetdurchgangsöffnungen, die jeweils einen Magneteinsatzabschnitt und ein Paar nicht magnetischer Abschnitte aufweisen. Der Rotorkern bildet zwischen einer äußeren Oberfläche des Rotorkerns und einer inneren Wand eines der nicht magnetischen Abschnitte einen Brückenabschnitt aus. Die innere Wand verläuft konzentrisch zur äußeren Oberfläche des Rotorkerns.

Ein weiteres Rotorblech ist aus der DE 10 2013 219 260 A1 bekannt.

Außerdem ist aus der EP 3 352 337 A2 ist ein Rotorblechpaket bekannt, das in eine Vielzahl von gleichgroßen und äquidistant angeordneten Sektoren, die jeweils einen ersten Halbsektor und einen durch eine Trennungsebene vom ersten Halbsektor getrennten zweiten Halbsektor aufweisen, untergliedert ist, wobei im ersten Halbsektor eine Durchgangsöffnung ausgebildet ist, die eine erste Schenkelseite, deren gedachte Verlängerung die Trennungsebene unter einem radial nach außen offenen, spitzen Winkel schneidet, eine zweite Schenkelseite, die parallel zur ersten Schenkelseite verläuft und deren gedachte Verlängerung die Trennungsebene radial weiter außen schneidet als die gedachte Verlängerung der ersten Schenkelseite, und einen Enden der Schenkelseiten, die der Trennungsebene abgewandt sind, verbindenden Rand aufweist, wobei im zweiten Halbsektor eine bezüglich der Trennungsebene spiegelsymmetrisch zur Durchgangsöffnung ausgebildete weitere Durchgangsöffnung ausgebildet ist. So offenbart diese Druckschrift ein aus Rotorblechen gebildetes Blechpaket. Das Rotorblech umfasst erste und zweite Ausnehmungen, die umfänglich um das Rotorblech verteilt angeordnet sind. Die ersten und zweiten Ausnehmungen dienen zur Aufnahme von Permanentmagneten und haben hierzu eine schlitzförmige, längliche und gerade Gestalt. Die ersten und zweiten Ausnehmungen sind derart orientiert, dass ihre Längsausdehnungen schräg bezüglich einer radialen Richtung verlaufen. Jeweils zwei zueinander V-förmig angeordnete erste und zweite Ausnehmungen bilden einen Rotorpol.

Beim Betrieb eines aus solchen Rotorblechen gebildeten Rotor mit hohen Drehzahlen treten in Brückenbereichen zwischen radial äußeren Enden der Durchgangsöffnungen und einer Außenkontur des Rotorblechs erhebliche mechanische Spannungen auf. Eine mechanische Spannungsbeständigkeit dieser Brückenbereiche beschränkt regelmäßig die zulässige Drehzahl des Rotors. Um diese zu erhöhen, muss bei einer vorgegebenen Form der Durchgangsöffnung ein größerer Abstand zum Außendurchmesser vorgesehen werden, was jedoch in der Regel zu unerwünschten magnetischen Streuflüssen führt, oder ein teureres Material mit höherer Spannungsbeständigkeit für die Rotorbleche verwendet werden.

Der Erfindung liegt mithin die Aufgabe zugrunde, eine verbesserte Gestaltung von Rotorblechen, insbesondere für den Einsatz in einer Antriebsmaschine für ein Fahrzeug, anzugeben.

Zur Lösung dieser Aufgabe ist erfindungsgemäß ein Rotorblech gemäß Anspruch 1 vorgesehen. Vorteilhafte Ausgestaltungen sind Gegenstand der abhängigen Ansprüche.

Die Erfindung beruht auf der Erkenntnis, dass eine signifikante Reduktion von mechanischen Spannungen in einem Brückenbereich zwischen dem Rand und der Außenkontur des Rotorblechs erzielt werden kann, wenn der Rand den äquidistanten Abschnitt aufweist. Das erfindungsgemäße Rotorblech ermöglicht es vorteilhafterweise, einen aus erfindungsgemäßen Rotorblechen gebildeten Rotor mit einer höheren Drehzahl zu betreiben oder alternativ bei gegebener Drehzahl Rotorbleche mit einem geringeren Streufluss und/oder aus einem Material mit einer geringeren mechanischen Beständigkeit auszubilden, was die Kosten eines solchen Rotorblechs reduziert.

Im Sinne der vorliegenden Erfindung verläuft der Rand äquidistant zur Außenkontur des Rotorblechs, wenn der Rand aus jenen Punkten besteht, die auf einer Normalen eines Punkts der Außenkontur in einem vorgegebenen Abstand liegen.

Typischerweise ist bei dem erfindungsgemäßen Rotorblech vorgesehen, dass die Außenkontur kreisrund ist. Es sind aber beispielsweise auch unregelmäßig runde Außenkonturen denkbar. Der äquidistante Abschnitt ist insbesondere auch konzentrisch zur Außenkontur. Das erfindungsgemäße Rotorblech weist bevorzugt wenigstens vier, besonders bevorzugt wenigstens sechs, ganz besonders bevorzugt wenigstens acht Sektoren auf. Eine Sehne des äquidistanten Abschnitts weist typischerweise eine Länge von wenigstens 25 Prozent, bevorzugt wenigstens 50 Prozent, besonders bevorzugt wenigstens 75 Prozent, eines Abstands der ersten Schenkelseite von der zweiten Schenkelseite auf. Sofern davon die Rede ist, dass die Durchgangsöffnungen spiegelsymmetrisch sind, heißt dies nicht, dass das Rotorblech insgesamt in beiden Halbsektoren notwendigerweise spiegelsymmetrisch ist.

Der erfindungsgemäß vorgesehene Vorsprung bildet vorteilhafterweise eine seitliche Begrenzung bzw. einen Anschlag für einen in die Durchgangsöffnung aufzunehmenden Permanentmagneten und erleichtert auch die Positionierung der Permanentmagnete während der Fertigung eines Rotors. Ein weiterer Vorsprung kann an das der Trennungsebene zugewandte Ende der ersten Schenkelseite angrenzen.

Um eine Vergrößerung des äquidistanten Abschnitts zu ermöglichen, ist erfindungsgemäß der Rücksprung im von der ersten Schenkelseite aus gesehenen Übergang des Rands in den äquidistanten Abschnitt vorgesehen.

Bei bestimmten Ausführungsformen ist vorgesehen, dass der Vorsprung zwischen der ersten Schenkelseite und dem Rücksprung liegt.

Es kann vorgesehen sein, der Rand zwischen dem Rücksprung und dem äquidistanten Abschnitt einen geraden, vorzugsweise parallel zur gedachten Verlängerung der ersten Schenkelseite verlaufenden, Abschnitt aufweist.

Geringere punktuelle mechanische Spannungen lassen sich dadurch erreichen, dass der Rand abgerundet mit einem kleineren Kurvenradius als jener des äquidistanten Abschnitts in den äquidistanten Abschnitt übergeht.

Bei dem erfindungsgemäßen Rotorblech kann ferner vorgesehen sein, dass der Rand durch eine Abrundung aus der zweiten Schenkelseite in den äquidistanten Abschnitt übergeht, deren Kurvenradius kleiner als jener des äquidistanten Abschnitts ist. So können auch punktuelle Spannungsüberhöhung beim Übergang von der zweiten Schenkelseite in den äquidistanten Abschnitt vermieden oder verringert werden.

Um ein verbessertes magnetisches Luftspaltfeld auszubilden ist es ferner bevorzugt, dass im ersten Halbsektor eine zweite Durchgangsöffnung ausgebildet ist, wobei die zweite Durchgangsöffnung eine erste Schenkelseite, deren gedachte Verlängerung die Trennungsebene unter einem radial nach außen offenen spitzen Winkel radial weiter außen als die gedachte Verlängerung der zweiten Schenkelseite der ersten Durchgangsöffnung schneidet, und eine zweite Schenkelseite, die parallel zur ersten Schenkelseite verläuft und deren gedachte Verlängerung die Trennungsebene weiter radial weiter außen schneidet als die gedachte Verlängerung der ersten Schenkelseite, aufweist, wobei im zweiten Halbsektor eine bezüglich der Trennungsebene spiegelsymmetrisch zur zweiten Durchgangsöffnung ausgebildete weitere Durchgangsöffnung ausgebildet ist. Eine solche Anordnung von wird auch als Doppel-V-Anordnung bezeichnet.

Es ist auch denkbar, dass im ersten Halbsektor eine weitere Durchgangsöffnung ausgebildet ist, die senkrecht auf der Trennungsebene liegt. Eine solche Anordnung wird auch als Dreiecks- oder Delta-Anordnung bezeichnet.

Die der Erfindung zugrunde liegende Aufgabe wird ferner gelöst durch ein Rotorblechpaket gemäß Anspruch 11.

Die der Erfindung zugrunde liegende Aufgabe wird außerdem gelöst durch einen Rotor gemäß Anspruch 12.

Daneben wird die der Erfindung zugrunde liegende Aufgabe gelöst durch eine elektrische Maschine gemäß Anspruch 13.

Schließlich wird die der Erfindung zugrunde liegende Aufgabe gelöst durch ein Fahrzeug gemäß Anspruch 14.

Weitere Vorteile und Einzelheiten der vorliegenden Erfindung ergeben sich aus den im folgenden beschriebenen Ausführungsbeispielen wie anhand der Zeichnungen. Diese sind schematische Darstellungen und zeigen:
- Fig. 1: eine Draufsicht auf ein Ausführungsbeispiel des erfindungsgemäßen Rotorblechs;
- Fig. 2: eine Draufsicht auf einen Halbsektor des in Fig. 1 gezeigten Rotorblechs;
- Fig. 3: eine Detailansicht eines Rands einer Durchgangsöffnung des in Fig. 1 gezeigten Rotorblechs;
- Fig. 4: eine Detailansicht eines Rands einer Durchgangsöffnung eines ersten Vergleichsbeispiels eines Rotorblechs;
- Fig. 5: eine Detailansicht eines Rands einer Durchgangsöffnung eines zweiten Vergleichsbeispiels eines Rotorblechs;
- Fig. 6: eine Prinzipskizze eines Ausführungsbeispiels einer erfindungsgemäßen elektrischen Maschine, umfassend ein Ausführungsbeispiel eines erfindungsgemäßen Rotors mit einem erfindungsgemäßen Rotorblechpaket;
- Fig. 7: eine Draufsicht auf einen Halbsektor eines Rotorblechs nach dem Stand der Technik; und
- Fig. 8: eine Prinzipskizze eines Ausführungsbeispiels des erfindungsgemäßen Fahrzeugs.

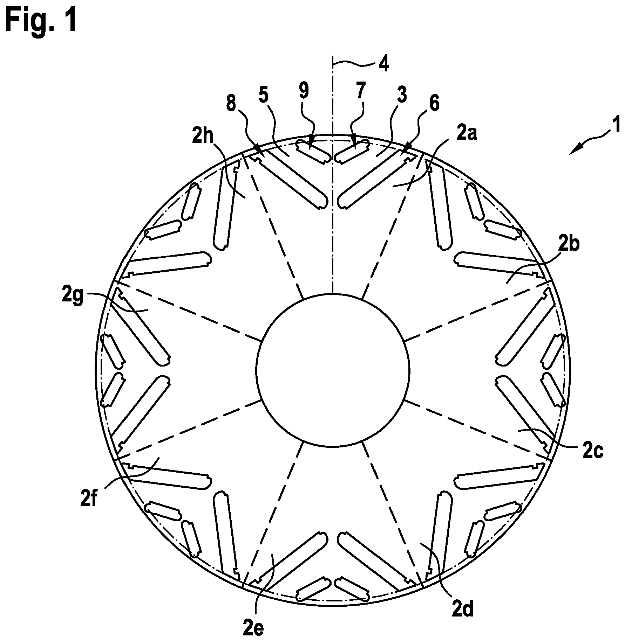

Fig. 1 ist eine Draufsicht auf ein Ausführungsbeispiel eines Rotorblechs 1, dass in eine Vielzahl von gleichgroßen, äquidistant angeordneten Sektoren 2a bis 2h untergliedert ist. Die Anzahl der Sektoren 2a bis 2h beträgt vorliegend exemplarisch acht.

Jeder Sektor 2a bis 2h weist einen ersten Halbsektor 3 und einen durch eine Trennungsebene 4 vom ersten Halbsektor 3 getrennten zweiten Halbsektor 5 auf. Im ersten Halbsektor 3 sind eine erste Durchgangsöffnung 6 und eine zweite Durchgangsöffnung 7 ausgebildet. Im zweiten Halbsektor 5 sind jeweils bezüglich der Trennungsebene 4 spiegelsymmetrisch zur ersten Durchgangsöffnung 6 eine weitere Durchgangsöffnung 8 und zur zweiten Durchgangsöffnung 7 eine weitere Durchgangsöffnung 9 ausgebildet. Im Folgenden werden aufgrund der Symmetrie der Durchgangsöffnungen 6 bis 9 lediglich die im ersten Halbsektor 3 vorgesehenen Durchgangsöffnungen 6 und 7 im Sektor 2a beschrieben, die insofern auch repräsentativ für die Halbsektoren 3, 5 übrigen Sektoren 2b bis 2g sind.

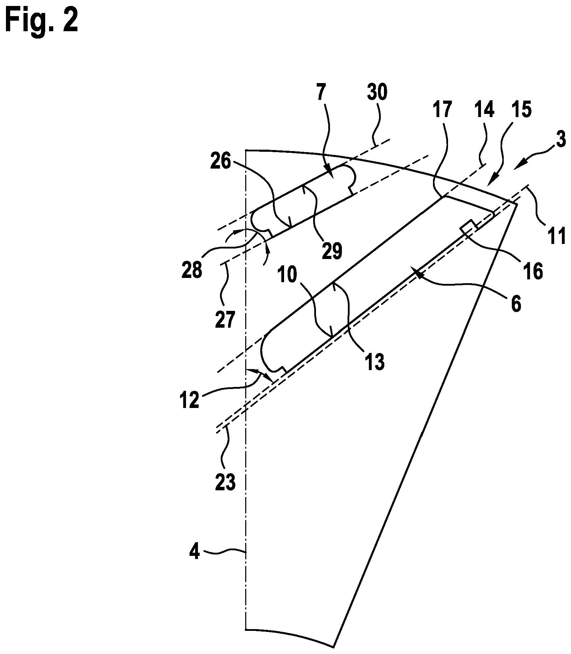

Fig. 2 ist eine Draufsicht auf den ersten Halbsektor 3 des Sektors 2a.

Die erste Durchgangsöffnung 6 weist eine erste Schenkelseite 10 auf, deren gedachte Verlängerung 11 die Trennungsebene 4 unter einem spitzen Winkel 12 schneidet. Eine zweite Schenkelseite 13 der ersten Durchgangsöffnung 6 verläuft parallel zur ersten Schenkelseite 10. Eine gedachte Verlängerung 14 der zweiten Schenkelseite 13 schneidet die Trennungsebene 4 radial weiter außen als die gedachte Verlängerung 11 der ersten Schenkelseite 10. Dabei weist die erste Durchgangsöffnung 6 einen Rand 15 auf, der ein der Trennungsebene 4 abgewandtes Ende 16 der ersten Schenkelseite 10 mit einem der Trennungsebene 4 abgewandten Ende 17 der zweiten Schenkelseite 13 verbindet

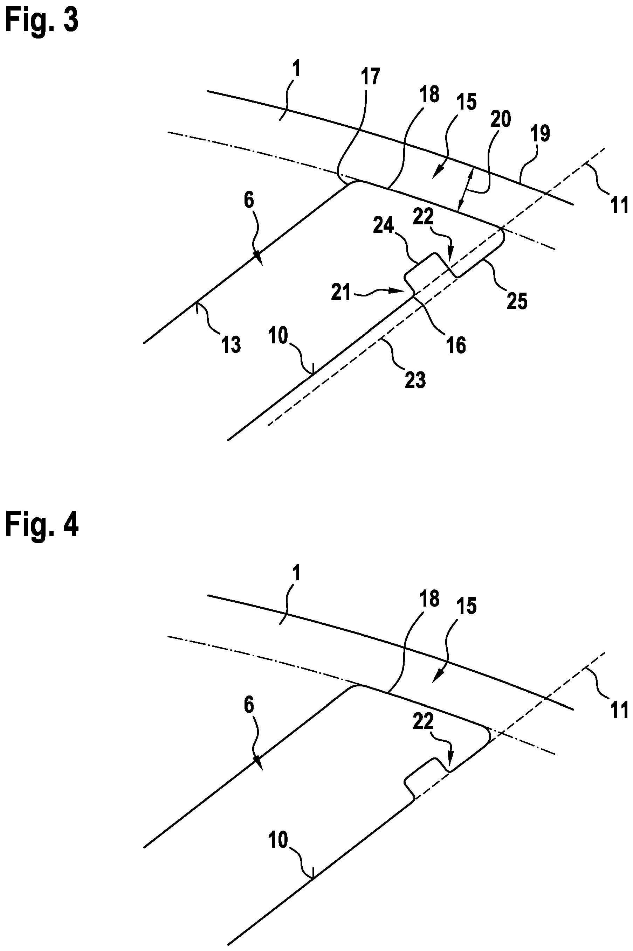

Fig. 3 ist eine Detailansicht des Rands 15 der ersten Durchgangsöffnung 6.

Der Rand 15 weist einen äquidistanten Abschnitt 18 auf, der äquidistant zu einer Außenkontur 19 des Rotorblechs 1 verläuft. Ein Abstand 20 zwischen dem äquidistanten Abschnitt 18 und der Außenkontur 19 ist folglich in Radialrichtung über einen bestimmten Winkelbereich in Umfangsrichtung konstant. Eine Länge einer Sehne des äquidistanten Abschnitts entspricht dabei im Wesentlichen dem Abstand zwischen den Schenkelseiten 10, 13.

Der Rand 15 weist ferner in seinem von der ersten Schenkelseite 10 aus gesehenen Übergang in den äquidistanten Abschnitt 18 einen in die Durchgangsöffnung 6 weisenden Vorsprung 21 und zwischen dem Vorsprung 21 und dem äquidistanten Abschnitt 18 einen Rücksprung 22 auf. Der Rücksprung 22 ist durch eine gedachte Linie 23 begrenzt, die parallel zur ersten Schenkelseite 10 verläuft und die Trennungsebene 4 (siehe Fig. 2) radial weiter innen schneidet als die gedachte Verlängerung 11 der ersten Schenkelseite 10. Zwischen dem Vorsprung 21 und dem Rücksprung 22 weist der Rand 15 einen geraden Abschnitt 24 auf, der parallel zur gedachten Verlängerung 11 der ersten Schenkelseite 10 verläuft, aber alternativ auch schräg sein kann. Ein Abstand zwischen dem geraden Abschnitt 24 und der gedachten Linie 23 beträgt ca. das 1,3-fache des Abstands des geraden Abschnitts 24 von der gedachten Verlängerung 11 der ersten Schenkelseite 10. Zwischen dem Rücksprung 22 und dem äquidistanten Abschnitt 18 weist der Rand 15 einen weiteren geraden Abschnitt 25 auf, der sich entlang der gedachten Linie 23 erstreckt.

Übergänge vom Ende 16 des ersten Schenkelabschnitts in den Vorsprung 21, vom Vorsprung 21 in den geraden Abschnitt 24, vom geraden Abschnitt 24 in den Rücksprung 22, vom Rücksprung 22 in den geraden Abschnitt 25 und vom geraden Abschnitt 24 in den äquidistanten Abschnitt 18 sind jeweils durch eine Abrundung ausbildet, deren Kurvenradius kleiner als jener des äquidistanten Abschnitts 18 ist. Eine solche Abrundung bildet auch den Übergang vom Ende 17 der zweiten Schenkelseite 13 in den äquidistanten Abschnitt 18 aus.

Wieder mit Bezug zu Fig. 2 weist die zweite Durchgangsöffnung 7 eine erste Schenkelseite 26 auf, deren gedachte Verlängerung 27 die Trennungsebene 4 unter einem radial nach außen offenen spitzen Winkel 28 radial weiter außen als die zweite Schenkelseite 13 der ersten Durchgangsöffnung 6 schneidet. Dabei ist der Winkel 28 vorliegend größer als der Winkel 12. Eine zweite Schenkelseite 29 der zweiten Durchgangsöffnung 7 verläuft parallel zur ersten Schenkelseite 26. Eine gedachte Verlängerung 30 der zweiten Schenkelseite 29 schneidet die Trennungsebene 4 radial weiter außen als die gedachte Verlängerung 27 der ersten Schenkelseite der zweiten Durchgangsöffnung 7.

Die folgenden Vergleichsbeispiele eines Rotorblechs 1 unterscheiden sich von dem ersten Ausführungsbeispiel gemäß Fig. 1 bis Fig. 3 lediglich durch die Ausgestaltung des Rands 15, sodass sich alle vorherigen Ausführungen zum Ausführungsbeispiel auf die Vergleichsbeispiele übertragen lassen, sofern im Folgenden nichts abweichendes beschrieben ist.

Fig. 4 ist eine Detailansicht des Rands 15 der ersten Durchgangsöffnung 6 des Vergleichsbeispiels des Rotorblechs 1. Der Rücksprung 22 erstreckt sich hier bis zur gedachten Verlängerung 11 der ersten Schenkelseite 10. Die Sehne des äquidistanten Abschnitts 18 ist so etwas kürzer als im Ausführungsbeispiel.

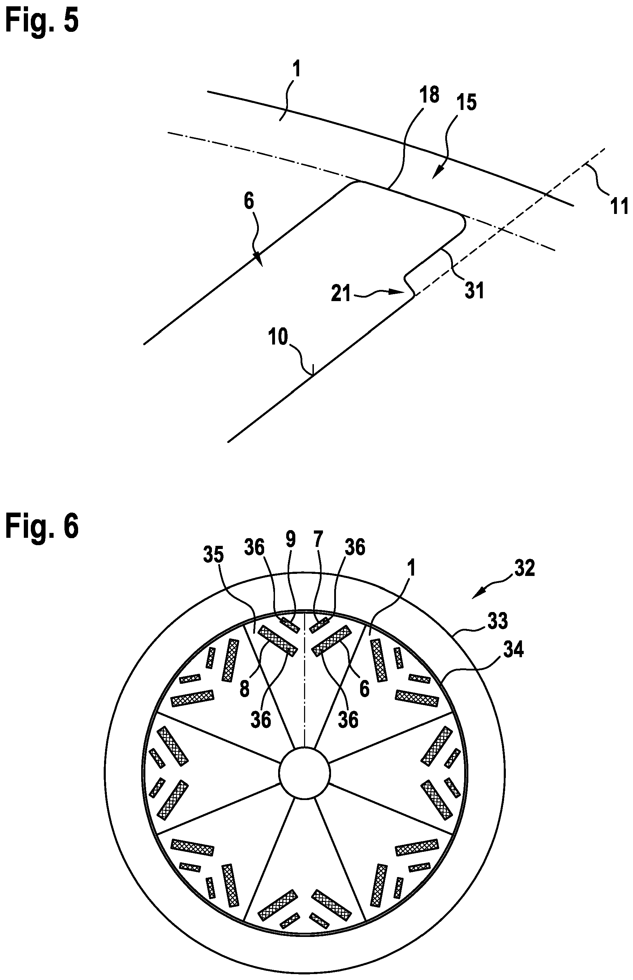

Fig. 5 ist eine Detailansicht des Rands 15 der ersten Durchgangsöffnung 6 des zweiten Vergleichsbeispiels des Rotorblechs 1. Hier verläuft der Rand 15 zwischen dem Vorsprung 21 und dem äquidistanten Abschnitt 18 entlang eines geraden Abschnitts 31, der parallel zur gedachten Verlängerung 11 der ersten Schenkelseite 10 verläuft, aber alternativ auch schräg sein kann. Dabei sind Übergänge vom Vorsprung 21 in den geraden Abschnitt 31 und vom geraden Abschnitt 31 in den äquidistanten Abschnitt 18 jeweils durch eine Abrundung ausgebildet, deren Kurvenradius kleiner als jener des äquidistanten Abschnitts 18 ist. Die Sehne des äquidistanten Abschnitts 18 ist etwas kürzer als im ersten Vergleichsbeispiel.

Fig. 6 ist eine Prinzipskizze eines Ausführungsbeispiels einer elektrischen Maschine 32, umfassend einen Stator 33 und ein innerhalb des Stators 33 gelagertes Ausführungsbeispiel eines Rotors 34.

Der Rotor 34 umfasst ein Ausführungsbeispiel eines Blechpaket 35, das aus einer Vielzahl von geschichteten und laminierten Rotorblechen 1 gemäß dem zuvor beschriebenen Ausführungsbeispiel gebildet ist. Die Durchgangsöffnungen 6 bis 9 eines jeweiligen Rotorblechs sind dabei deckungsgleich übereinander angeordnet, sodass sie Magnettaschen des Rotorblechpakets 35 für Permanentmagnete 36 des Rotors 34 ausbilden.

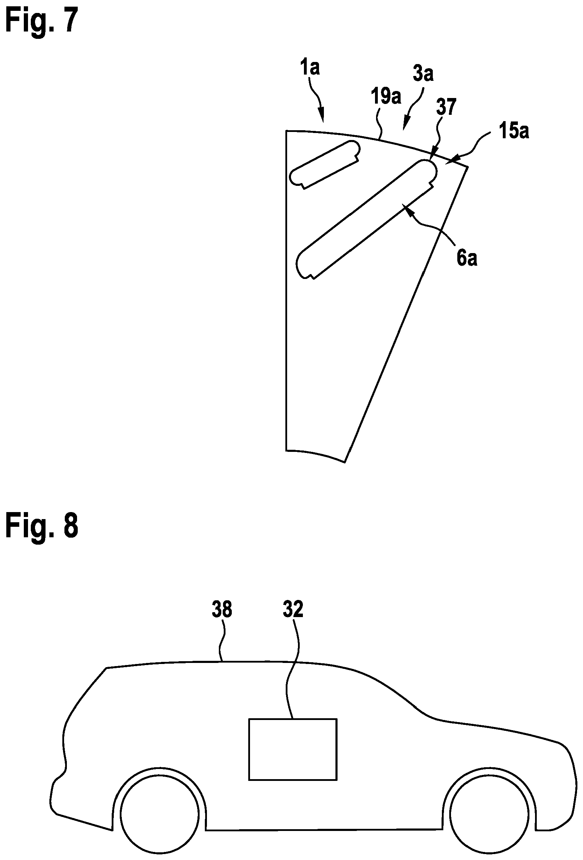

Fig. 7 ist eine Draufsicht auf einen Halbsektor 3a eines Rotorblechs 1a nach dem Stand der Technik, bei dem ein Rand 15a einer Durchgangsöffnung 6a ersichtlich keinen äquidistanten Abschnitt aufweist. Im Übrigen entspricht das Rotorblech 1a im Wesentlichen dem Ausführungsbeispiel des Rotorblechs 1.

Durch Simulation wurde ermittelt, dass beim rotierenden Betrieb mit einer Drehzahl von 16.000 min⁻¹ einer Fig. 6 entsprechenden elektrischen Maschine, die auf Grundlage des Rotorblechs 1a ausgebaut ist, in einem Brückenbereich 37 zwischen dem Rand 15a und einer Außenkontur 19a des Rotorblechs 1a ein Maximum der mechanischen Spannung bei ca. 424 MPa liegt. Demgegenüber liegt das Maximum der mechanischen Spannung in einem solchen Brückenbereich beim zweiten Vergleichsbeispiel bei ca. 410 MPa, beim ersten Vergleichsbeispiel bei ca. 370 MPa und beim Ausführungsbeispiel bei ca. 337 MPa, sodass durch die äquidistanten Abschnitte 18 Reduktionen der maximalen mechanischen Spannung von 3,3 Prozent, 12,7 Prozent bzw. 20,5 Prozent erzielt werden können.

Fig. 8 ist eine Prinzipskizze eines Ausführungsbeispiels eines Fahrzeugs 38, umfassend Ausführungsbeispiel einer elektrischen Maschine 32 gemäß Fig. 6, die dazu eingerichtet ist, das Fahrzeug 38 anzutreiben. Das Fahrzeug 38 kann ein batterieelektrisches Fahrzeug (BEV) oder ein Hybridfahrzeug sein.

## Patentansprüche

1. Rotorblech (1), das in eine Vielzahl von gleichgroßen und äquidistant angeordneten Sektoren (2a-2h), die jeweils einen ersten Halbsektor (3) und einen durch eine Trennungsebene (4) vom ersten Halbsektor (3) getrennten zweiten Halbsektor (5) aufweisen, untergliedert ist, wobei im ersten Halbsektor (3) eine Durchgangsöffnung (6) ausgebildet ist, die
- eine erste Schenkelseite (10), deren gedachte Verlängerung (11) die Trennungsebene (4) unter einem radial nach außen offenen, spitzen Winkel (12) schneidet,
- eine zweite Schenkelseite (13), die parallel zur ersten Schenkelseite (10) verläuft und deren gedachte Verlängerung (14) die Trennungsebene (4) radial weiter außen schneidet als die gedachte Verlängerung (11) der ersten Schenkelseite (10), und
- einen Enden (16, 17) der Schenkelseiten (10, 13), die der Trennungsebene (4) abgewandt sind, verbindenden Rand (15), welcher
(i) einen nicht punktförmigen äquidistanten Abschnitt (18), der äquidistant zu einer Außenkontur (19) des Rotorblechs (1) verläuft,
(ii) in seinem von der ersten Schenkelseite (10) aus gesehenen Übergang in den äquidistanten Abschnitt (18) einen in die Durchgangsöffnung weisenden Vorsprung (21) und
(iii) in seinem von der ersten Schenkelseite (10) aus gesehenen Übergang in den äquidistanten Abschnitt (18) einen von der Durchgangsöffnung (6) wegweisenden Rücksprung (22) aufweist,
aufweist, wobei im zweiten Halbsektor (5) eine bezüglich der Trennungsebene (4) spiegelsymmetrisch zur Durchgangsöffnung (6) ausgebildete weitere Durchgangsöffnung (8) ausgebildet ist,
**dadurch gekennzeichnet**,
der Rücksprung (22) durch eine gedachte Linie (23), die parallel zur ersten Schenkelseite (10) verläuft und die Trennungsebene (4) radial weiter innen schneidet als die gedachte Verlängerung (11) der ersten Schenkelseite (10), begrenzt ist, wobei der Abstand zwischen einer gedachten Linie, die parallel zur ersten Schenkelseite (10) verläuft und bis zu der sich der Vorsprung (21) in die Durchgangsöffnung (6) erstreckt, und einer gedachten Linie (23), die parallel zur ersten Schenkelseite verläuft und bis zu der sich der Rücksprung (22) erstreckt, wenigstens das 1,1-fache und höchstens das 2-fache des Abstands zwischen der gedachten Linie, die parallel zur ersten Schenkelseite verläuft und bis zu der sich der Vorsprung (21) in die Durchgangsöffnung erstreckt, und der gedachten Verlängerung (11) der ersten Schenkelseite (10) beträgt.

2. Rotorblech nach Anspruch 1, wobei
der Abstand zwischen der gedachten Linie, die parallel zur ersten Schenkelseite (10) verläuft und bis zu der sich der Vorsprung (21) in die Durchgangsöffnung (6) erstreckt, und der gedachten Linie (23), die parallel zur ersten Schenkelseite verläuft und bis zu der sich der Rücksprung (22) erstreckt, wenigstens das 1,2-fache des Abstands zwischen der gedachten Linie, die parallel zur ersten Schenkelseite verläuft und bis zu der sich der Vorsprung (21) in die Durchgangsöffnung erstreckt, und der gedachten Verlängerung (11) der ersten Schenkelseite (10) beträgt.

3. Rotorblech nach Anspruch 2, wobei
der Abstand zwischen der gedachten Linie, die parallel zur ersten Schenkelseite (10) verläuft und bis zu der sich der Vorsprung (21) in die Durchgangsöffnung (6) erstreckt, und der gedachten Linie (23), die parallel zur ersten Schenkelseite verläuft und bis zu der sich der Rücksprung (22) erstreckt, wenigstens das 1,3-fache des Abstands zwischen der gedachten Linie, die parallel zur ersten Schenkelseite verläuft und bis zu der sich der Vorsprung (21) in die Durchgangsöffnung erstreckt, und der gedachten Verlängerung (11) der ersten Schenkelseite (10) beträgt.

4. Rotorblech nach einem der vorhergehenden Ansprüche, wobei
der Abstand zwischen der gedachten Linie, die parallel zur ersten Schenkelseite (10) verläuft und bis zu der sich der Vorsprung (21) in die Durchgangsöffnung (6) erstreckt, und der gedachten Linie (23), die parallel zur ersten Schenkelseite verläuft und bis zu der sich der Rücksprung (22) erstreckt, höchstens das 1,7-fache des Abstands zwischen der gedachten Linie, die parallel zur ersten Schenkelseite verläuft und bis zu der sich der Vorsprung (21) in die Durchgangsöffnung erstreckt, und der gedachten Verlängerung (11) der ersten Schenkelseite (10) beträgt.

5. Rotorblech nach Anspruch 3, wobei
der Abstand zwischen der gedachten Linie, die parallel zur ersten Schenkelseite (10) verläuft und bis zu der sich der Vorsprung (21) in die Durchgangsöffnung (6) erstreckt, und der gedachten Linie (23), die parallel zur ersten Schenkelseite verläuft und bis zu der sich der Rücksprung (22) erstreckt, höchstens das 1,4-fache des Abstands zwischen der gedachten Linie (23), die parallel zur ersten Schenkelseite verläuft und bis zu der sich der Vorsprung (21) in die Durchgangsöffnung erstreckt, der gedachten Verlängerung (11) der ersten Schenkelseite (10) beträgt.

6. Rotorblech nach einem der vorhergehenden Ansprüche, wobei
der Vorsprung (21) zwischen der ersten Schenkelseite (10) und dem Rücksprung (22) liegt.

7. Rotorblech nach einem der vorhergehenden Ansprüche, wobei
der Rand (15) zwischen dem Rücksprung (22) und dem äquidistanten Abschnitt (18) einen geraden, vorzugsweise parallel zur gedachten Verlängerung (11) der ersten Schenkelseite (10) verlaufenden, Abschnitt (25) aufweist.

8. Rotorblech nach einem der vorhergehenden Ansprüche, wobei
der Rand (15) abgerundet mit einem kleineren Kurvenradius als jener des äquidistanten Abschnitts (18) in den äquidistanten Abschnitt (18) übergeht.

9. Rotorblech nach einem der vorhergehenden Ansprüche, wobei
der Rand (15) durch eine Abrundung aus der zweiten Schenkelseite (13) in den äquidistanten Abschnitt (18) übergeht, deren Kurvenradius kleiner als jener des äquidistanten Abschnitts (18) ist.

10. Rotorblech nach einem der vorhergehenden Ansprüche, wobei
im ersten Halbsektor (3) eine zweite Durchgangsöffnung (7) ausgebildet ist, wobei die zweite Durchgangsöffnung (7) eine erste Schenkelseite (26), deren gedachte Verlängerung (27) die Trennungsebene (4) unter einem radial nach außen offenen spitzen Winkel (28) radial weiter außen als die gedachte Verlängerung (14) der zweiten Schenkelseite (13) ersten Durchgangsöffnung (6) schneidet und eine zweite Schenkelseite (29), die parallel zur ersten Schenkelseite (26) verläuft und deren gedachte Verlängerung (30) die Trennungsebene (4) radial weiter außen schneidet als die gedachte Verlängerung (27) der ersten Schenkelseite (26), aufweist, wobei im zweiten Halbsektor (5) eine bezüglich der Trennungsebene (4) spiegelsymmetrisch zur zweiten Durchgangsöffnung (7) ausgebildete weitere Durchgangsöffnung (9) ausgebildet ist.

11. Rotorblechpaket (35), umfassend eine Vielzahl von Rotorblechen (1) nach einem der vorhergehenden Ansprüche, die derart geschichtet miteinander verbunden sind, dass eine jeweilige Durchgangsöffnung (6-9) der Rotorbleche (1) eine sich in Axialrichtung erstreckende Magnettasche ausbildet.

12. Rotor (34), umfassend ein Rotorblechpaket (35) nach Anspruch 11, wobei in einer jeweiligen Magnettasche ein Permanentmagnet (36) angeordnet ist.

13. Elektrische Maschine (32), umfassend einen Rotor (34) nach Anspruch 12.

14. Fahrzeug (38), umfassend eine elektrische Maschine (32) nach Anspruch 13, welche dazu eingerichtet ist, das Fahrzeug (38) anzutreiben.

## Claims

1. Rotor sheet (1), which is subdivided into a plurality of equally sized and equidistantly arranged sectors (2a-2h), each having a first half-sector (3) and a second half-sector (5) separated from the first half-sector (3) by a separation plane (4), wherein a through-opening (6) is formed in the first half-sector (3), which comprises:
• a first leg side (10), the imaginary extension (11) of which intersects the separation plane (4) at an acute angle (12) that opens radially outward,
• a second leg side (13), which runs parallel to the first leg side (10), and the imaginary extension (14) of which intersects the separation plane (4) radially further outward than the imaginary extension (11) of the first leg side (10), and
• an edge (15) connecting ends (16, 17) of the leg sides (10, 13) that face away from the separation plane (4), wherein the edge (15) comprises:
(i) a non-point-shaped equidistant section (18), which runs equidistantly to an outer contour (19) of the rotor sheet (1),
(ii) in its transition to the equidistant section (18) viewed from the first leg side (10), a protrusion (21) pointing into the through-opening (6), and
(iii) in its transition to the equidistant section (18) viewed from the first leg side (10), a recess (22) pointing away from the through-opening (6),
wherein a further through-opening (8), which is mirror-symmetrical to the through-opening (6) with respect to the separation plane (4), is formed in the second half-sector (5),
**characterized in that**
the recess (22) is bounded by an imaginary line (23), which runs parallel to the first leg side (10) and intersects the separation plane (4) radially further inward than the imaginary extension (11) of the first leg side (10), wherein the distance between an imaginary line which is parallel to the first leg side (10) and to which the protrusion (21) extends into the through-opening (6), and an imaginary line (23) which is parallel to the first leg side (10) and to which the recess (22) extends is at least 1.1 times and at most 2 times the distance between the imaginary line which is parallel to the first leg side (10) and to which the protrusion (21) extends into the through-opening (6) and the imaginary extension (11) of the first leg side (10).

2. Rotor sheet according to claim 1, wherein
the distance between the imaginary line which is parallel to the first leg side (10) and to which the protrusion (21) extends into the through-opening (6), and the imaginary line (23) which is parallel to the first leg side (10) and to which the recess (22) extends is at least 1.2 times the distance between the imaginary line which is parallel to the first leg side (10) and to which the protrusion (21) extends into the through-opening (6) and the imaginary extension (11) of the first leg side (10).

3. Rotor sheet according to claim 2, wherein
the distance between the imaginary line which is parallel to the first leg side (10) and to which the protrusion (21) extends into the through-opening (6), and the imaginary line (23) which is parallel to the first leg side (10) and to which the recess (22) extends is at least 1.3 times the distance between the imaginary line which is parallel to the first leg side (10) and to which the protrusion (21) extends into the through-opening (6) and the imaginary extension (11) of the first leg side (10).

4. Rotor sheet according to one of the preceding claims, wherein
the distance between the imaginary line which is parallel to the first leg side (10) and to which the protrusion (21) extends into the through-opening (6), and the imaginary line (23) which is parallel to the first leg side (10) and to which the recess (22) extends is at most 1.7 times the distance between the imaginary line which is parallel to the first leg side (10) and to which the protrusion (21) extends into the through-opening (6) and the imaginary extension (11) of the first leg side (10).

5. Rotor sheet according to claim 3, wherein
the distance between the imaginary line which is parallel to the first leg side (10) and to which the protrusion (21) extends into the through-opening (6), and the imaginary line (23) which is parallel to the first leg side (10) and to which the recess (22) extends is at most 1.4 times the distance between the imaginary line which is parallel to the first leg side (10) and to which the protrusion (21) extends into the through-opening (6) and the imaginary extension (11) of the first leg side (10).

6. Rotor sheet according to one of the preceding claims, wherein
the protrusion (21) lies between the first leg side (10) and the recess (22).

7. Rotor sheet according to one of the preceding claims, wherein
the edge (15) between the recess (22) and the equidistant section (18) comprises a straight section (25), preferably running parallel to the imaginary extension (11) of the first leg side (10).

8. Rotor sheet according to one of the preceding claims, wherein
the edge (15) transitions into the equidistant section (18) with a smaller curve radius than that of the equidistant section (18).

9. Rotor sheet according to one of the preceding claims, wherein
the edge (15) transitions from the second leg side (13) into the equidistant section (18) via a rounding, whose curve radius is smaller than that of the equidistant section (18).

10. Rotor sheet according to one of the preceding claims, wherein
a second through-opening (7) is formed in the first half-sector (3), wherein the second through-opening (7) comprises a first leg side (26), the imaginary extension (27) of which intersects the separation plane (4) at an acute angle (28) that opens radially outward further outward than the imaginary extension 14) of the second leg side (13), and a second leg side (29), which runs parallel to the first leg side (26), and the imaginary extension (30) of which intersects the separation plane (4) radially further outward than the imaginary extension (27) of the first leg side (26), wherein a further through-opening (9), which is mirror-symmetrical to the second through-opening (7) with respect to the separation plane (4), is formed in the second half-sector (5).

11. Rotor sheet package (35), comprising a plurality of rotor sheets (1) according to one of the preceding claims, which are stacked and connected to each other such that a respective through-opening (6-9) of the rotor sheets (1) forms a magnet pocket extending in the axial direction.

12. Rotor (34), comprising a rotor sheet package (35) according to claim 11,
wherein a permanent magnet (36) is arranged a respective each magnet pocket.

13. Electric machine (32), comprising a rotor (34) according to claim 12.

14. Vehicle (38), comprising an electric machine (32) according to claim 13, which is designed to drive the vehicle (38).

## Revendications

1. Tôle de rotor (1), qui est subdivisée en une pluralité de secteurs (2a-2h) de taille égale et disposés de manière équidistante, chacun comprenant un premier demi-secteur (3) et un second demi-secteur (5) séparé du premier demi-secteur (3) par un plan de séparation (4), une ouverture traversante (6) étant formée dans le premier demi-secteur (3), qui comprend :
• un premier côté de jambe (10), dont le prolongement imaginaire (11) coupe le plan de séparation (4) selon un angle aigu (12) s'ouvrant radialement vers l'extérieur,
• un second côté de jambe (13), qui est parallèle au premier côté de jambe (10), et dont le prolongement imaginaire (14) coupe le plan de séparation (4) radialement plus vers l'extérieur que le prolongement imaginaire (11) du premier côté de jambe (10), et
• un bord (15) reliant les extrémités (16, 17) des côtés de jambe (10, 13) qui font face à l'opposé du plan de séparation (4), ledit bord (15) comprenant :
(i) une section équidistante non ponctuelle (18), qui est équidistante par rapport à un contour extérieur (19) de la tôle de rotor (1),
(ii) dans sa transition vers la section équidistante (18) vue depuis le premier côté de jambe (10), une saillie (21) orientée vers l'intérieur de l'ouverture traversante (6), et
(iii) dans sa transition vers la section équidistante (18) vue depuis le premier côté de jambe (10), un retrait (22) orienté à l'opposé de l'ouverture traversante (6),
une autre ouverture traversante (8), qui est symétrique par miroir par rapport à l'ouverture traversante (6) selon le plan de séparation (4), étant formée dans le second demi-secteur (5),
**caractérisée en ce que**
le retrait (22) est délimité par une ligne imaginaire (23), qui est parallèle au premier côté de jambe (10) et coupe le plan de séparation (4) radialement plus vers l'intérieur que le prolongement imaginaire (11) du premier côté de jambe (10), la distance entre une ligne imaginaire qui est parallèle au premier côté de jambe (10) et jusqu'à laquelle la saillie (21) s'étend dans l'ouverture traversante (6), et une ligne imaginaire (23) qui est parallèle au premier côté de jambe (10) et jusqu'à laquelle le retrait (22) s'étend, étant au moins 1,1 fois et au plus 2 fois la distance entre la ligne imaginaire qui est parallèle au premier côté de jambe (10) et jusqu'à laquelle la saillie (21) s'étend dans l'ouverture traversante (6) et le prolongement imaginaire (11) du premier côté de jambe (10).

2. Tôle de rotor selon la revendication 1, dans laquelle
la distance entre la ligne imaginaire qui est parallèle au premier côté de jambe (10) et jusqu'à laquelle la saillie (21) s'étend dans l'ouverture traversante (6), et la ligne imaginaire (23) qui est parallèle au premier côté de jambe (10) et jusqu'à laquelle le retrait (22) s'étend, est au moins 1,2 fois la distance entre la ligne imaginaire qui est parallèle au premier côté de jambe (10) et jusqu'à laquelle la saillie (21) s'étend dans l'ouverture traversante (6) et le prolongement imaginaire (11) du premier côté de jambe (10).

3. Tôle de rotor selon la revendication 2, dans laquelle
la distance entre la ligne imaginaire qui est parallèle au premier côté de jambe (10) et jusqu'à laquelle la saillie (21) s'étend dans l'ouverture traversante (6), et la ligne imaginaire (23) qui est parallèle au premier côté de jambe (10) et jusqu'à laquelle le retrait (22) s'étend, est au moins 1,3 fois la distance entre la ligne imaginaire qui est parallèle au premier côté de jambe (10) et jusqu'à laquelle la saillie (21) s'étend dans l'ouverture traversante (6) et le prolongement imaginaire (11) du premier côté de jambe (10).

4. Tôle de rotor selon l'une des revendications précédentes, dans laquelle
la distance entre la ligne imaginaire qui est parallèle au premier côté de jambe (10) et jusqu'à laquelle la saillie (21) s'étend dans l'ouverture traversante (6), et la ligne imaginaire (23) qui est parallèle au premier côté de jambe (10) et jusqu'à laquelle le retrait (22) s'étend, est au plus 1,7 fois la distance entre la ligne imaginaire qui est parallèle au premier côté de jambe (10) et jusqu'à laquelle la saillie (21) s'étend dans l'ouverture traversante (6) et le prolongement imaginaire (11) du premier côté de jambe (10).

5. Tôle de rotor selon la revendication 3, dans laquelle
la distance entre la ligne imaginaire qui est parallèle au premier côté de jambe (10) et jusqu'à laquelle la saillie (21) s'étend dans l'ouverture traversante (6), et la ligne imaginaire (23) qui est parallèle au premier côté de jambe (10) et jusqu'à laquelle le retrait (22) s'étend, est au plus 1,4 fois la distance entre la ligne imaginaire qui est parallèle au premier côté de jambe (10) et jusqu'à laquelle la saillie (21) s'étend dans l'ouverture traversante (6) et le prolongement imaginaire (11) du premier côté de jambe (10).

6. Tôle de rotor selon l'une des revendications précédentes, dans laquelle
la saillie (21) est située entre le premier côté de jambe (10) et le retrait (22).

7. Tôle de rotor selon l'une des revendications précédentes, dans laquelle
le bord (15) entre le retrait (22) et la section équidistante (18) comprend une section droite (25), de préférence parallèle au prolongement imaginaire (11) du premier côté de jambe (10).

8. Tôle de rotor selon l'une des revendications précédentes, dans laquelle
le bord (15) passe dans la section équidistante (18) avec un rayon de courbure plus petit que celui de la section équidistante (18).

9. Tôle de rotor selon l'une des revendications précédentes, dans laquelle
le bord (15) passe du second côté de jambe (13) à la section équidistante (18) par un arrondi dont le rayon de courbure est plus petit que celui de la section équidistante (18).

10. Tôle de rotor selon l'une des revendications précédentes, dans laquelle
une seconde ouverture traversante (7) est formée dans le premier demi-secteur (3), ladite seconde ouverture traversante (7) comprenant un premier côté de jambe (26), dont le prolongement imaginaire (27) coupe le plan de séparation (4) selon un angle aigu (28) s'ouvrant radialement vers l'extérieur, plus vers l'extérieur que le prolongement imaginaire (14) du second côté de jambe (13), et un second côté de jambe (29), qui est parallèle au premier côté de jambe (26), et dont le prolongement imaginaire (30) coupe le plan de séparation (4) radialement plus vers l'extérieur que le prolongement imaginaire (27) du premier côté de jambe (26), une autre ouverture traversante (9), qui est symétrique par miroir par rapport à la seconde ouverture traversante (7) selon le plan de séparation (4), étant formée dans le second demi-secteur (5).

11. Paquet de tôles de rotor (35), comprenant une pluralité de tôles de rotor (1) selon l'une des revendications précédentes, qui sont empilées et reliées entre elles de manière à ce qu'une ouverture traversante respective (6-9) des tôles de rotor (1) forme une poche magnétique s'étendant dans la direction axiale.

12. Rotor (34), comprenant un paquet de tôles de rotor (35) selon la revendication 11, dans lequel un aimant permanent (36) est disposé dans chaque poche magnétique respective.

13. Machine électrique (32), comprenant un rotor (34) selon la revendication 12.

14. Véhicule (38), comprenant une machine électrique (32) selon la revendication 13, qui est conçue pour entraîner le véhicule (38).
